# EUROPEAN PATENT APPLICATION

(11) **EP 1 688 469 A1**
(43) Date of publication of application: **09.08.2006**
(21) Application number: 04799925.5
(22) Date of filing: 26.11.2004
(51) Int. Cl.: C09D 183/08, C09K 3/00, G02B 1/10, B05D 7/24, B32B 27/00

(54) **ANTI-FOGGING TREATING FLUID AND METHOD FOR PRODUCTION THEREOF, ANTI-FOGGING ARTICLE AND METHOD FOR PRODUCTION THEREOF**

(30) Priority: 28.11.2003 JP 2003399352; 16.01.2004 JP 2004009174; 07.06.2004 JP 2004169025; 07.06.2004 JP 2004169026
(71) Applicant: SEIKO EPSON CORPORATION, Shinjuku-ku, Tokyo 163-0811 (JP)
(72) Inventor: KAWASE, Akiko, c/o SEIKO EPSON CORPORATION,, Nagano 3928502 (JP); KATAGIRI, Hiroshi, c/o SEIKO EPSON CORPORATION,, Suwa-Shi, Nagano 3928502 (JP)
(74) Representative: HOFFMANN EITLE
(86) International application number: PCT/JP2004/018001
(87) International publication number: WO 2005/052079

(57) **Abstract**

An anti-fogging treatment liquid in which a simple body, or a condensate which is a dimer or a higher polymeric material that is prepared while controlling a degree of condensation of an organosilane containing at least one sulfur atom at a noncoupling position or a hydrolysate thereof is allowed to be contained in a hydrophilic organic solvent. Further, a production method for the anti-fogging treatment liquid in which the organosilane containing at least one sulfur atom at a noncoupling position or the condensate which is the dimer or the higher polymeric material of the hydrolysate thereof is, based on the entire weight of the organosilane, from 1% by weight to less than 70% by weight and which is prepared by controlling a treatment liquid holding environment and/or a catalyst. Based on these liquid and method, the anti-fogging treatment liquid excellent in the anti-fogging performance, the anti-fogging durability and the high film strength, and the anti-fogging article having the film having such anti-fogging performance as described above formed thereon can be obtained.

## Description

### Technical Field

The present invention relates to an anti-fogging treatment liquid capable of forming a film excellent in an anti-fogging property on a surface of one of various types of base materials, a method for producing the liquid, an anti-fogging article in which the anti-fogging liquid is applied on the surface of one of the various types of base materials to form a film thereon and a method for producing the article.

### Background Art

When a surface of an article has irregularities to be caused by an attachment of a fine water droplet, a scar or the like, a fog is generated on the surface by scattering of light. The present invention relates to prevention of fogging which is generated by attaching the fine water droplet on a surface of an optical article, that is, to imparting of an anti-fogging performance.

Conventionally, as for methods for imparting the anti-fogging performance on a surface of an article, a method for absorbing a water droplet by imparting a water-absorbing property on a surface, a method for absorbing a water droplet by using a porous film, a method for hardly attaching water on a surface by increasing a static angle of contact of the surface against water, a method for evaporating a water droplet by heating an optical article, a method for increasing a dew point of the surface and the like are mentioned.

Among these methods, as for a method for imparting the surface with hydrophilicity, decreasing a static angle of contact of a surface against water and spreading a water droplet, a method in which a surfactant is applied to a surface of an article to form a film containing the surfactant on the surface is proposed (for example, JP-A No. 2001-190471).

Further, a method in which, when an anti-fogging performance, is imparted, particularly, to a thin film, against a surface of an article, an organosilane having a sulfonic acid group or a sulfuric acid group or a hydrolysate thereof which has a high hydrophilicity to the surface of the article is used for the purpose of exhibiting and maintaining the anti-fogging performance is proposed (for example, USP No. 4,325,638 and JP-A No. 2002-60692).

However, in a constitution of application of the surfactant to the surface of the article or forming the film containing the surfactant on the surface as described in JP-A No. 2001-190471, attachment of water causes dropping of the surfactant and, accordingly, there is a problem in durability of an anti-fogging effect.

Further, there is a problem in that, when the article is limited to an optical application, reflection characteristics of the surface are varied in accordance with thickness of a film to be formed on the surface, to thereby change optical characteristics such as light ray reflectance and transmittance.

Still further, the hydrophilic article to be obtained by treating a sulfonic acid-modified organosilane as described in USP No. 4,325, 638 can obtain a sufficient anti-fogging performance immediately after the treatment due to a large amount of a surfactant simultaneously used, but hardly has durability thereof owing to dropping of the surfactant caused by washing or the like.

Furthermore, an hydrophilic article to be obtained by using the anti-fogging liquid in which an organosilane containing a sulfonic acid or sulfonic acid precursor, or a hydrolysate thereof is diluted by an hydrophilic organic solvent, as described in JP-A No. 2002-60692, has a problem in that it is insufficient in a density of a hydrophilic group and, accordingly, can not obtain a high anti-fogging performance even immediately after the treatment.

An object of the present invention is to provide a treatment liquid which can solve conventional problems, impart an anti-fogging performance without impairing an optical performance, prevent fogging by a fine water droplet in any living environment and obtain an anti-fogging article having a sustainable anti-fogging performance, a method for producing the treatment liquid, an anti-fogging article in which a film is formed on a surface of any one of various types of base by using the treatment liquid material and a method for producing the anti-fogging article.

### Disclosure of the Invention

The present inventors have intensively exerted studies and, as a result, have found that an anti-fogging article which can be imparted with a sufficient film strength, namely, have an excellent anti-fogging characteristic, prevent fogging by a fine water droplet in any living environment and have a sustainable anti-fogging performance can be produced without decreasing a density of a hydrophilic group by using a hydrophilic material having a different degree of condensation.

A phenomenon of fogging on an article by a water droplet is generated by condensation of moisture vapor on a surface of the article when the moisture vapor contained in the air becomes lower than a dew point thereof. The condensation of the moisture vapor occurs such that a multiplicity of arbitrary places on the surface of the article become nucleus and, then, a water droplet grows large starting from these places, while water droplets adjacent to each other are combined and repeating such combination.

In order to impart the surface of the article with the anti-fogging property, a method of promoting the combination of water droplets adjacent to each other in the course in which the water droplet grows large, spreading the water droplet and, then, preventing generation of fog is effective.

Namely, a method of imparting hydrophilicity on the surface is effective. However, in a constitution of applying of a surfactant which is ordinarily known or forming a film containing the surfactant on the surface, although an initial anti-fogging effect is excellent, dropping of the surfactant occurs by attachment of the water droplet and, accordingly, there is a problem of durability of the anti-fogging effect. Therefore, it is important to fix a hydrophilic component on the surface of the article, in order to allow the anti-fogging effect to be sustainable.

However, in the conventional method, when a position on the surface of the article for fixing the hydrophilic component thereto, or a position in the film for performing cross-linking thereat is provided, the dense of the hydrophilic group in the film is decreased and, accordingly, a sufficient anti-fogging performance is not obtained. Further, unless the position on the surface of the article for fixing the hydrophilic component thereto, or the position in the film for performing cross-linking thereat is sufficiently provided, there is a problem in that the film itself has no durability.

In order to solve these problems, an anti-fogging liquid according to the present invention is characterized in that an organosilane containing at least one sulfur atom at a noncoupling position and/or a simple body of a hydrolysate (at least one of the organosilane and the hydrolysate), and a condensate which is a dimer or a higher polymeric body thereof are diluted by a hydrophilic organic solvent.

According to the aforementioned feature, the anti-fogging treatment liquid which is capable of producing a film having a sufficient anti-fogging performance and durability of the film itself can be provided. Namely, the organosilane having at least one sulfur atom at the noncoupling position and/or the hydrolysate thereof which is present as a simple body not only fixes a base material to the film, but also reacts between the condensate which is the dimer or the higher polymeric body, among the condensate which is the dimer or the higher polymeric body and a simple molecule, and between the simple molecule and, then, serves as a glue for filling a gap. By such service and a position for fixing a hydrophilic component on a surface of an article and a position for performing cross-linking are present in the film and, accordingly, production of the film having a sufficient anti-fogging performance and durability of the film itself becomes possible.

Further, the anti-fogging treatment liquid according to the present invention is characterized in that the condensate which is the dimer or the higher polymeric body of the organosilane containing at least one sulfur atom at the noncoupling position is, based on the entire weight of the organosilane, from 1% by weight to less than 70% by weight.

According to the aforementioned feature, the anti-fogging treatment liquid which is capable of producing the film having a sufficient anti-fogging performance and durability of the film itself can be provided. Namely, the organosilane having at least one sulfur atom at the noncoupling position and/or the hydrolysate thereof which is present as a simple body not only fixes a base material to the film, but also reacts between the condensate which is the dimer or the higher polymeric body, among the condensate which is the dimer or the higher polymeric body.and a simple molecule, and between the simple molecule and, then, serves as a glue for filling a gap. When the condensate which is the dimer or the higher polymeric body of the organosilane containing at least one sulfur atom at the noncoupling position is, based on the entire weight of the organosilane, from 1% by weight to less than 70% by weight, and other organosilanes each containing at least one sulfur atom at the noncoupling position is a simple body, the position for fixing the hydrophilic component on the surface of the article and the position for performing the cross-linking in the film are present in a well-balanced manner and, accordingly, the film having a sufficient anti-fogging performance and durability of the film itself can be produced.

Further, the anti-fogging treatment liquid according to the present invention is characterized in that the organosilane containing at least one sulfur atom at the noncoupling position and/or the hydrolysate thereof contains at least one functional group selected from among a sulfonic acid ester group, a thiol group, a sulfide group, a disulfide group and a sulfonic acid group.

According to the aforementioned feature, at least one group from among a sulfonic acid ester group, a thiol group, a sulfide group, a disulfide group and a sulfonic acid group which show a favorable hydrophilicity and at least one group thereof at the noncoupling position is contained and, accordingly, the film having a favorable anti-fogging performance can be obtained.

Further, the anti-fogging treatment liquid according to the present invention is characterized in that the organosilane containing at least one sulfur atom at the noncoupling position and/or the simple body of the hydrolysate thereof, and the condensate which is the dimer or the higher polymeric body thereof are diluted by the hydrophilic organic solvent, being characterized by further comprising a surfactant.

According to the aforementioned feature, by allowing the anti-fogging treatment liquid in which the organosilane containing at least one sulfur atom at the noncoupling position and/or the simple body of the hydrolysate thereof, and the condensate which is the dimer or the higher polymeric body thereof are diluted by the hydrophilic organic solvent to comprise a surfactant, when an article is treated with the treatment liquid, a uniform film having a favorable appearance can be produced without impairing the anti-fogging characteristic, to thereby being capable of enhancing the anti-fogging characteristic.

Further, the anti-fogging article is characterized in that a film having an anti-fogging performance produced by the anti-fogging treatment liquid is formed on a surface of a base material.

According to the aforementioned feature, the anti-fogging article having a sufficient anti-fogging performance and durability of the film itself can be obtained.

Further, the anti-fogging article according to the present invention is characterized in that the base material is a lens.

According to the aforementioned feature, the film having the anti-fogging performance formed by the anti-fogging treatment liquid in which an organosilane containing at least one sulfur atom at a noncoupling position and/or a simple body of a hydrolysate thereof, and a condensate which is a dimer or a higher polymeric body thereof are diluted by a hydrophilic organic solvent can produce the lens having the anti-fogging performance without impairing an optical characteristic. When the article is used for an optical application, a reflection characteristic is changed in accordance with thickness of the film to be formed on the surface thereof and, accordingly, there is a risk of change optical characteristics such as light reflectance and transmittance; however, the film having the anti-fogging performance formed by the treatment liquid diluted by the hydrophilic organic solvent is extremely thin to hardly give influence to the optical characteristic and, accordingly, the lens having a favorable anti-fogging performance can be obtained.

Further, a material for producing an anti-fogging treatment liquid according to the present invention is characterized in that an organosilane containing at least one sulfur atom at a noncoupling position and/or a hydrolysate thereof is maintained for from 0.1 hour to 200 hours at from 0°C to 70°C, to thereby produce a simple body or a condensate which is a dimer or a higher polymeric body thereof.

According to the aforementioned feature, at a coupling position of the organosilane containing at least one sulfur atom at a noncoupling position and/or a hydrolysate thereof, hydrolysis and condensation advance more slowly as the temperature is lower and more rapidly as the temperature is higher. By controlling the temperature and the time, the anti-fogging treatment liquid in which the condensate which is the dimer or the higher polymeric body of the organosilane containing at least one sulfur atom at the noncoupling position is, based on the entire weight of the organosilane, for 1% by weight to less than 70% by weight can be produced.

Further, the method for producing the anti-fogging treatment liquid according to the present invention is characterized in that the organosilane containing at least one sulfur atom at the noncoupling position and/or the hydrolysate thereof is treated in the presence of at least one catalyst selected from among an acid catalyst, an alkali catalyst, an amine-type catalyst and a metallic compound catalyst, to thereby produce the simple body or the condensate which is the dimer or the higher polymeric body thereof.

According to the aforementioned feature, by controlling the condensation and the hydrolysis of the coupling position of the organosilane containing at least one sulfur atom at a noncoupling position and/or a simple body of a hydrolysate thereof by at least one catalyst selected from among the acid catalyst, the alkali catalyst, the amine-type catalyst and the metallic compound catalyst, the anti-fogging treatment liquid in which the condensate which is the dimer or the higher polymeric body of the organosilane containing at least one sulfur atom at the noncoupling position is, based on the entire weight of the organosilane, from 1% by weight to less than 70% by weight can be produced.

Further, the method for producing the anti-fogging treatment liquid according to the present invention is characterized in that the organosilane containing at least one sulfur atom at the noncoupling position and/or the hydrolysate thereof contains at least one functional group selected from among the sulfonic acid ester, the thiol group, the sulfide group and the disulfide group and in that the functional group is converted into a sulfonic acid group.

According to the aforementioned feature, by converting the sulfonic acid ester, the thiol group, the sulfide group and the disulfide group of the organosilane containing at least one sulfur atom at the noncoupling position and/or the hydrolysate thereof into the sulfonic acid group having a more favorable hydrophilicity, the film having a more favorable anti-fogging performance can be produced.

Further, a method for producing an anti-fogging treatment liquid according to the present invention is characterized by comprising the steps of:
applying a treatment liquid in which an organosilane containing at least one sulfur atom at a noncoupling position and/or a simple body of a hydrolysate thereof, and a condensate which is a dimer or a higher polymeric body thereof are diluted by a hydrophilic organic solvent on a surface of a base material; and
thermally treating the base material thus applied with the treatment liquid, to thereby dry-cure the treatment liquid.

According to the aforementioned feature, by applying a treatment liquid in which an organosilane containing at least one sulfur atom at a noncoupling position and/or a simple body of a hydrolysate thereof, and a condensate which is a dimer or a higher polymeric body thereof are diluted by a hydrophilic organic solvent on a surface of a base material; and thermally treating the base material thus applied with the treatment liquid, to thereby dry-cure the treatment liquid, a reaction of a coupling position of the organosilane containing at least one sulfur atom at the noncoupling position and/or the hydrolysate thereof is allowed to be completed and, accordingly, the anti-fogging article having a sufficient anti-fogging performance and durability of the film itself can be obtained.

Further, a method for producing an anti-fogging article according to the present invention is characterized by comprising the steps of: converting at least one functional group selected from among a sulfonic acid ester group, a thiol group, a sulfide group and a disulfide group contained in a treatment liquid in which an organosilane containing at least one sulfur atom at a noncoupling position and/or a simple body of a hydrolysate thereof, and a condensate which is a dimer or a higher polymeric body thereof are diluted by a hydrophilic organic solvent into a sulfonic acid group; applying the treatment liquid are diluted by a hydrophilic organic solvent on a surface of a base material; and thermally treating the base material thus applied with the treatment liquid, to thereby dry-cure the treatment liquid.

According to the aforementioned feature, by converting the sulfonic acid ester group, the thiol group, the sulfide group or the disulfide group of the organosilane containing at least one sulfur atom at the noncoupling position and/or the hydrolysate thereof into the sulfonic acid group which has a more favorable hydrophilicity, a more favorable anti-fogging performance can be imparted. Further, by applying the treatment liquid on a surface of a base material; and thermally treating the base material thus applied with the treatment liquid, to thereby dry-cure the treatment liquid, a reaction of a coupling position of the organosilane containing at least one sulfur atom at the noncoupling position and/or the hydrolysate thereof is allowed to be completed and, accordingly, the anti-fogging article having a sufficient anti-fogging performance and durability of the film itself can be obtained.

Further, a method for producing an anti-fogging article according to the present invention is characterized by comprising the steps of: applying a treatment liquid in which an organosilane containing at least one sulfur atom at a noncoupling position and/or a simple body of a hydrolysate thereof, and a condensate which is a dimer or a higher polymeric body thereof are diluted by a hydrophilic organic solvent on a surface of a base material; thermally treating the base material thus applied with the treatment liquid, to thereby dry-cure the treatment liquid; and converting at least one functional group selected from among a sulfonic acid ester group, a thiol group, a sulfide group and a disulfide group contained at a noncoupling position into a sulfonic acid group.

According to the aforementioned feature, by applying a treatment liquid in which an organosilane containing at least one sulfur atom at a noncoupling position and/or a simple body of a hydrolysate thereof, and a condensate which is a dimer or a higher polymeric body thereof are diluted by a hydrophilic organic solvent on a surface of a base material; thermally treating the base material thus applied with the treatment liquid, to thereby dry-cure the treatment liquid, a reaction of a coupling position of the organosilane containing at least one sulfur atom at the noncoupling position and/or the hydrolysate thereof is allowed to be completed, to thereby form a film having a sufficient anti-fogging performance and durability of the film itself; and, further, by converting at least one functional group selected from among the sulfonic acid ester group, the thiol group, the sulfide group and the disulfide group contained at the noncoupling position into the sulfonic acid group, the anti-fogging article having a more favorable anti-fogging performance can be obtained.

Further, the method for producing the anti-fogging article according to the present invention is characterized in that the step of thermally treating the base material applied with the treatment liquid to dry-cure the treatment liquid is performed for from 1 minute to 24 hours at a temperature in the range of from 50°C to 300°C.

According to the aforementioned feature, after the treatment liquid in which the organosilane containing at least one sulfur atom at the noncoupling position and/or the hydrolysate thereof is diluted in the hydrophilic organic solvent is applied on the surface of the base material, the solvent in the thus-applied treatment liquid is removed, to thereby complete a reaction of the organosilane and, accordingly, the article having the sufficient anti-fogging performance and durability of the film itself can be obtained.

Further, the method for producing the anti-fogging article according to the present invention is characterized in that the method for applying the treatment liquid on the surface of the base material is a dip coating method.

According to the aforementioned feature, by using the dip coating method, the anti-fogging article having a uniform film having a favorable appearance can be obtained.

Further, the method for producing the anti-fogging article according to the present invention is characterized in that the method for applying the treatment liquid on the surface of the base material is a spin coating method.

According to the aforementioned feature, by using the spin coating method, the anti-fogging article having a uniform film having a favorable appearance can be obtained.

The treatment liquid containing at least one sulfur atom at the noncoupling position in the anti-fogging treatment liquid according to the present invention comprises a simple body or a condensate which is a dimer or a higher polymeric body thereof. The condensate which is the dimer or the higher polymeric body thereof enhances a density of the hydrophilic group in the film. Further, the organosilane present as a simple body not only fixes the film to the base material, but also reacts between the condensate which is the dimer or the higher polymeric body, between the condensate which is the dimer or the higher polymeric body and the simple body, and between the simple body, to thereby serve as glue for filling a gap. By such service, there is an action of realizing a film strength and a high adhesiveness with the surface of the article. Further, since the simple body working as glue has a hydrophilic group, there is a possibility of exhibiting an excellent anti-fogging characteristic without deteriorating the density of the hydrophilic group in the film.

The condensate which is the dimer or the higher polymeric body of the organosilane containing at least one sulfur atom at the noncoupling position in the anti-fogging treatment liquid according to the present invention can obtain a sufficient density of the hydrophilic group so long as it is a dimer or a higher polymeric body. In order to obtain a higher density of the hydrophilic group, it is desirable to contain condensates having various degrees of condensation of at least a dimer and more preferably, among condensates having various degrees of condensation of at least a dimer, it is favorable to contain the condensate having a low degree of condensation is more than that having a high degree of condensation, to thereby prevent a filling rate in the film from decreasing.

As for appropriate hydrophilic organic solvent to be used in the anti-fogging treatment liquid according to the present invention, mentioned are alcohols such as methanol, ethanol, propanol and butanol; glycols such as ethylene glycol and propylene glycol; glycol ethers such as glycerin and propylene glycol monomethyl ether; ketones such as acetone and methyl isobutyl ketone; ethers such as tetrahydrofuran and dioxane; and water. The hydrophilic organic solvents may be used either alone or in any mixtures thereof.

It is preferable that an amount of the organosilane containing at least one sulfur atom at the noncoupling position to be contained is from 0.1% by weight to 25% by weight. When it is less than 0.1% by weight, an anti-fogging film becomes thin to cause a problem in durability. Even when it is used in a higher concentration than 25% by weight, thickness and performance of the anti-fogging film appear unchanged to cause an economical disadvantage. When the article is used for the optical application, the reflection characteristic of the surface is changed depending on thickness of the film to be formed on the surface and, accordingly, light reflectance and transmittance are changed; therefore, such film as does not change the optical characteristic is necessary. On this occasion, the amount thereof to be contained is preferably from 0.1% by weight to 2% by weight.

The condensate which is the dimer or the higher polymeric body of the organosilane containing at least one sulfur atom at the noncoupling position and/or the hydrolysate thereof is, based on the entire weight of the organosilane, from 1% by weight to less than 70% by weight. When it is less than 1% by weight, the density of the hydrophilic group becomes low and, accordingly, a sufficient anti-fogging characteristic can not be obtained. Further, when it is 70% by weight or more, the organosilane of the simple body can not sufficiently play the role thereof and, accordingly, a sufficient film strength can not be obtained. In order to obtain a higher anti-fogging performance and film strength, a ratio of the presence of the organosilane containing at least one sulfur atom at the noncoupling position and/or the simple body of the hydrolysate thereof to the condensate which is the dimer or the higher polymeric body is important. Since an optimum ratio is determined depending on types of the organosilanes, the amount of the condensate which is the dimer or the higher polymeric body to be contained is not limited; however, it is preferably from 5% by weight to less than 50% by weight.

The organosilane containing at least one sulfur atom at the noncoupling position and/or the hydrolysate thereof contains at least one functional group selected from among a sulfonic acid ester group, a thiol group, a sulfide group, a disulfide group and a sulfonic acid group. The sulfonic acid ester group, the thiol group, the sulfide group and the disulfide group are preferably oxidized to be a sulfonic acid group or a sulfuric acid group.

Although the sulfonic acid ester group, the thiol group, the sulfide group and the disulfide group may be present at any position of the organosilane and/or the hydrolysate thereof, in order to allow the hydrophilicity to be easily realized, it is preferable that the sulfonic acid group or the sulfuric acid group comes to be present at the end when changed thereto. A reaction position of the organosilane is changed into a silanol such as a chlorosilane, an alkoxy silane or a silazane which is a group capable of performing condensation, reaction with an active group on the surface of the article.

Examples of the organosilanes each containing at least one sulfur atom at the noncoupling position and/or the hydrolysates thereof include 3-mercaptopropyl triethoxy silane, 3-mercaptopropyl trimethoxy silane, 3-mercaptopropyl methyl dimethoxy silane, 3-mercaptopropyl dimethyl methoxy silane, 2-mercaptopropyl triethoxy silane, 2-mercaptopropyl trimethoxy silane, 2-mercaptopropyl methyl dimethoxy silane, 2-mercaptopropyl dimethyl methoxy silane, 2-mercaptoethyl triethoxy silane, 2-mercaptoethyl trimethoxy silane, 2-mercaptoethyl methyl dimethoxy silane, 2-mercaptoethyl dimethyl methoxy silane, 2-(2-chloroethyl thioethyl)triethoxy silane, mercaptomethyl trimethoxy silane, dimethoxy-3-mercaptopropyl methyl silane, 2-(2-aminoethyl thioethyl)diethoxy methyl silane, dimethoxy methyl-3-(3-phenoxy propyl thiopropyl)silane, 3-(2-acetoxy ethyl thiopropyl)dimethoxy methyl silane, 2-(2-aminoethyl thioethyl)triethoxy silane, 3-trimethoxy silyl propane sulfonic acid isopropyl ester, bis[3-(triethoxy silyl)propyl]tetrasulfide, bis[3-(triethoxy silyl)propyl] disulfide, bis[3-(triethoxy silyl) propyl] sulfide and 3-trimethoxy silyl propyl sulfonic acid.

The anti-fogging treatment liquid according to the present invention can mix a surfactant for the purpose of enhancing uniformity and appearance of an anti-fogging treated film. Surfactants such as an anionic surfactant, a nonionic surfactant, a cationic surfactant and an amphoteric surfactant, a reactive derivative thereof and the like are mentioned; however, from the standpoint of an interaction with a group containing a sulfur atom in the side of the organosilane, anionic ones are preferable and the anionic surfactants in each of which an anionic group is sulfuric acid, a sulfate, sulfonic acid or a sulfonate are more preferable. The surfactants may be used by one specified type or in mixtures of two or more types. The surfactants can be mixed with each other within the range of not interfering with an anti-fogging film strength. Therefore, the surfactants can be mixed in the range of from 1% by weight to 50% by weight on the basis of the organosilane containing at least one sulfur atom at the noncoupling position and/or the hydrolysate thereof.

Specifically, examples of anionic surfactants include alkyl sulfuric acid ester salts such as sodium lauryl sulfate, sodium higher alcohol sulfate and triethanolamine lauryl sulfate; alkyl benzene sulfonates such as sodium dodecyl benzene sulfonate; alkyl naphthalene sulfonates such as sodium alkyl naphthalene sulfonate; alkyl sulfosuccinates such as sodium dialkyl sulfosuccinate; alkyl diphenyl ether disulfonates such as sodium alkyl diphenyl ether disulfonate; alkyl phosphates such as potassium alkyl phosphate; polyoxyethylene alkyl (or alkyl aryl) sulfuric acid ester salts such as sodium polyoxyethylene lauryl ether sulfate, sodium polyoxyethylene alkyl ether sulfate, triethanolamine polyoxyethylene alkyl ether sulfate and sodium polyoxyethylene alkyl phenyl ether sulfate; specific reactive anionic surfactants; specific carboxylic acid-type surfactants; naphthalene sulfonic acid formalin condensates such as a sodium salt of β-naphthalene sulfonic acid formalin condensate and a sodium salt of specific aromatic sulfonic acid formalin condensate; specific polycarboxylic acid-type polymeric surfactants; and polyoxyethylene alkyl phosphoric acid ester.

Examples of nonionic surfactants include polyoxyethylene alkyl ethers such as polyoxyethylene lauryl ether, polyoxyethylene cetyl ether, polyoxyethylene stearyl ether, polyoxyethylene oleyl ether and polyoxyethylene higher alcohol ether; polyoxyethylene alkyl aryl ethers such as polyoxyethylene nonylphenyl ether; polyoxyethylene derivatives; sorbitan fatty acid esters such as sorbitan monolaurate, sorbitan monopalmitate, sorbitan monostearate, sorbitan tristearate, sorbitan monooleate, sorbitan trioleate, sorbitan sesquioleate and sorbitan distearate; polyoxyethylene sorbitan fatty acid esters such as polyoxyethylene sorbitan monolaurate, polyoxyethylene sorbitan monopalmitate, polyoxyethylene sorbitan monostearate, polyoxyethylene sorbitan tristearate, polyoxyethylene sorbitan monooleate and polyoxyethylene sorbitan trioleate; polyoxyethylene sorbitol fatty acid esters such as tetraoleic acid polyoxyethylene sorbit; glycerin fatty acid ester such as glycerol monostearate, glycerol monooleate and self-emulsification type glycerol monostearate; polyoxyethylene fatty acid esters such as polyethylene glycol monolaurate, polyethylene glycol monostearate, polyethylene glycol distearate and polyethylene glycol monooleate; polyoxyethylene alkylamine; polyoxyethylene hardened castor oil; and alkyl alkanolamide.

Examples of cationic and amphoteric surfactants include alkyl amine salts such as coconut amine acetate and stearylamine acetate; quaternary ammonium salts such as lauryl trimethyl ammonium chloride, stearyl trimethyl ammonium chloride, cetyl trimethyl ammonium chloride, distearyl dimethyl ammonium chloride and alkyl benzyl dimethyl ammonium chloride; alkyl betaines such as lauryl betaine, stearyl betaine, lauryl carboxymethyl hydroxyethyl imidazolium betaine; and amine oxides such as lauryl dimethyl amine oxide.

At a coupling position of the organosilane containing at least one sulfur atom at a noncoupling position hydrolysis and condensation advance more slowly as the temperature is lower and more rapidly as the temperature is higher in a hydrophilic organic solvent. Since the condensation advances extremely slowly at less than 0°C, it takes an extremely long period of time to prepare a condensate which is a dimer or a higher polymeric body and, accordingly, workability is inferior. Whereas, since condensation advances extremely rapidly at a temperature over 70°C, it is hard to perform a control. Therefore, after the organosilane containing at least one sulfur atom at a noncoupling position and/or a hydrolysate thereof is diluted by the hydrophilic organic solvent, the resultant solution is preferably maintained for from 0.1 hour to 200 hours at from 0°C to 70°C. Further, in order to more stably control the condensation, it is more preferably maintained for from 2 hours to 200 hours at from 0°C to 40°C.

When the condensate which is the dimer or the higher polymeric body of the organosilane having at least one sulfur atom at the noncoupling position is prepared, a method of using a catalyst selected from among an acid catalyst, an alkali catalyst, an amine-type catalyst and a metallic compound catalyst may be combined with a method of controlling by an environment.

By controlling the condensation and hydrolysis of the coupling position of the organosilane having at least one sulfur atom at the noncoupling position and/or the hydrolysate thereof by using a catalyst selected from among the acid catalyst, the alkali catalyst, the amine-type catalyst and the metallic compound catalyst, the anti-fogging treatment liquid in which the condensate is the dimer or the higher polymeric body of the organosilane having at least one sulfur atom at the noncoupling position is, based on the entire weight of the organosilane, from 1% by weight to 70% by weight can easily be produced.

Examples of acid catalysts include hydrochloric acid, sulfuric acid, a nitric acid, acetic acid, formic acid, tartaric acid, citric acid and carbonic acid. Such acids as have no carboxyl group such as hydrochloric acid, sulfuric acid, a nitric acid and carbonic acid have an effect of promoting the hydrolysis, while, since the acid having a carboxyl group performs coordination with the organosilane, the acid has an effect of suppressing the condensation. Therefore, when the acid having no carboxyl group and a carboxyl group are used in combination, a degree of the condensation can more easily be controlled.

Examples of alkali catalysts include sodium hydroxide, potassium hydroxide, calcium hydroxide and ammonium compounds. As for the amine-type catalysts, specifically, any one of amines such as ethylene diamine, N,N-dimethyl benzyl amine, tripropyl amine, tributyl amine, tripentyl amine, n-butyl amine, triethyl amine and guanidine; amino acids such as guanidine; and imidazoles such as such as 2-methyl imidazole, 2,4-diethyl imidazole and 2-phenyl imidazole is permissible and, from the standpoint of effects of forming a hydrogen bond and suppressing a condensation reaction against the hydrolysis and condensate, an amine containing a hydroxyl group is preferable.

Examples of metallic compound catalysts include metallic acetyl acetonates such as aluminum acetyl acetonate, titanium acetyl acetonate and chromium acetyl acetonate; organic acid metal salts such as sodium acetate, lead naphthanate and tin octylate; Lewis acids such as SnCl₄, TiCl₄ and ZnCl₂; and magnesium perchlorate.

As for tertiary amines and organic tin compound catalysts, it is ordinarily known that any one of them may be mixed in order to enhance the effect. An amount of the catalyst to be mixed can not be generalized due to differences in effect among catalysts and is desirably within the range without interfering with the anti-fogging characteristic of the film and, specifically, is preferably 75% or less on the basis of solid content in the treatment liquid.

By converting any one of the sulfonic acid ester group, the thiol group, the sulfide group and the disulfide group of the organosilane having at least one sulfur atom at the noncoupling position and/or the hydrolysate thereof into a sulfonic acid group which exhibits a more favorable hydrophilicity, a more favorable anti-fogging performance can be provided.

Oxidation of the sulfonic acid ester group, the thiol group, the sulfide group and the disulfide group can be performed before or after the organosilane and/or the hydrolysate thereof is condensed; however, in order to more efficiently perform oxidation, it is preferably performed before the organosilane and/or the hydrolysate thereof is condensed. The oxidation is performed by an oxidation reaction (oxidation by using sodium permanganate, a hydrogen peroxide solution, hydrochloric acid, hydrogen bromide, a gas containing ozone or the like) which is ordinarily used.

In order to enhance reactivity between the organosilane having at least one sulfur atom at the noncoupling position and/or the hydrolysate thereof and a surface of an article, a plasma treatment or an alkali treatment is performed on the surface of the article to increase an activity thereof. By such treatment, there is an effect in reaction rate with the surface of the article and the anti-fogging performance is also improved.

The article to be treated with the anti-fogging treatment liquid according to the present invention is a material selected from the group consisting of: glass, plastics, oxides, metals, wood, ceramics, cement, concrete, fibers, paper, stone and leather. In view of the reaction with the organosilane, a surface of any one of oxides inclusive of glass is preferable.

Meanings of terms as used herein and the details of the present invention are as described above. In order to facilitate understanding of the present invention, features of the present invention will be described below.

Firstly, as for a first feature according to the present invention, by containing an organosilane containing at least one sulfur atom at a noncoupling position and/or a simple body of a hydrolysate thereof, and a condensate which is a dimer or a higher polymeric body thereof, a sufficient density of hydrophilicity can be obtained and an excellent anti-fogging property can be realized. Further, by allowing the organosilane having at least one sulfur atom at the noncoupling position and/or the condensate which is the dimer or the higher polymeric body of the hydrolysate thereof to be, based on the entire weight of the organosilane, from 0.5% by weight to less than 70% by weight, a hydrophilic group can efficiently be arranged in a film, to thereby enhance film strength and adhesiveness with a surface of an article.

As for a second feature, in a method for preparing the organosilane having at least one sulfur atom at the noncoupling position and/or the condensate which is the dimer or the higher polymeric body of the hydrolysate thereof, a control thereof is performed by maintaining the treatment liquid under a predetermined environment. Further, the condensate can be prepared in a state either containing or not containing at least one catalyst selected from among an acid catalyst, an alkali catalyst, an amine-type catalyst and a metallic compound catalyst.

As for a third feature, by applying a treatment liquid in which an organosilane containing at least one sulfur atom at a noncoupling position and/or a simple body of a hydrolysate thereof, and a condensate which is a dimer or a higher polymeric body thereof are diluted by a hydrophilic organic solvent on a surface of a base material, a sufficient density of a hydrophilic group can be obtained and an article on which a film having an excellent anti-fogging performance is formed can be prepared.

Further, by allowing the organosilane having at least one sulfur atom at the noncoupling position and/or the condensate which is the dimer or the higher polymeric body of the hydrolysate thereof to be, based on the entire weight of the organosilane, from 0.5% by weight to less than 70% by weight, a hydrophilic group can efficiently be arranged in the film and an anti-fogging article in which film strength and adhesiveness with a surface of a base material is enhanced can be prepared. Still further, the organosilane containing at least one sulfur atom at the noncoupling position and/or the simple body of the hydrolysate thereof, and the condensate which is the dimer or a higher polymeric body thereof are diluted by the hydrophilic organic solvent may comprise a surfactant.

As for a fourth feature, it is an anti-fogging article characterized in that the base material is a lens. By using a treatment liquid in which an organosilane containing at least one sulfur atom at a noncoupling position and/or a simple body of a hydrolysate thereof, and a condensate which is a dimer or a higher polymeric body thereof are diluted by a hydrophilic organic solvent, a film having an anti-fogging performance to be formed is extremely thin and, therefore, a lens having the anti-fogging performance can be prepared without impairing an optical characteristic.

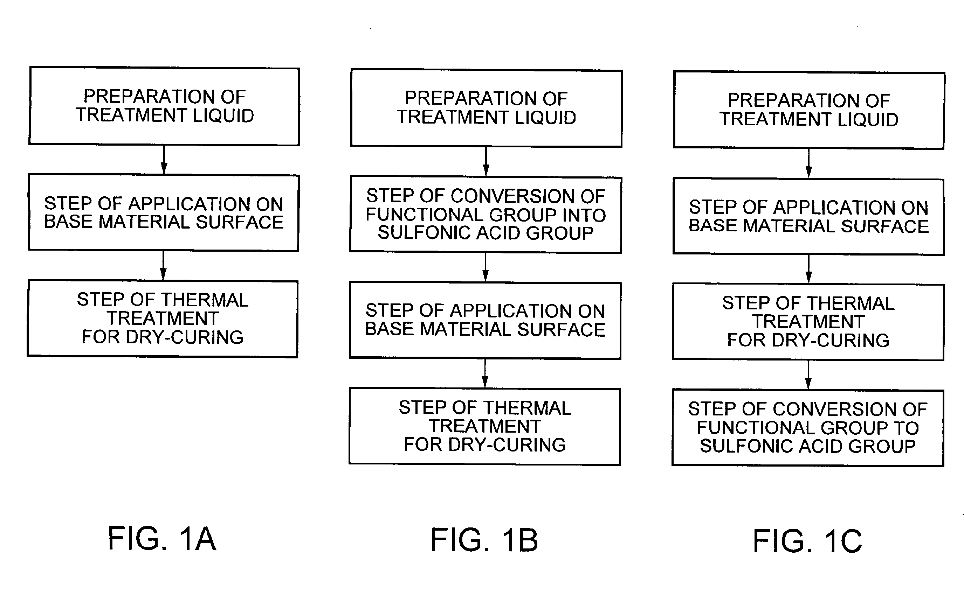

As for a fifth feature, a method for producing an anti-fogging article, as shown in a production process flow-chart of the anti-fogging article as shown in FIG. 1A comprises the steps of: applying a treatment liquid in which an organosilane containing at least one sulfur atom at a noncoupling position and/or a simple body of a hydrolysate thereof, and a condensate which is a dimer or a higher polymeric body thereof are diluted by a hydrophilic organic solvent on a surface of a base material; and thermally treating the base material thus applied with the treatment liquid, to thereby dry-cure the treatment liquid.

Further, as shown in a production process flow-chart of an anti-fogging article as shown in FIG. 1B, it is a method for producing an anti-fogging article comprising the steps of: converting at least one functional group selected from among a sulfonic acid ester group, a thiol group, a sulfide group and a disulfide group contained in a treatment liquid in which an organosilane containing at least one sulfur atom at a noncoupling position and/or a simple body of a hydrolysate thereof, and a condensate which is a dimer or a higher polymeric body are diluted by a hydrophilic organic solvent into a sulfonic acid group; applying the treatment liquid on a surface of a base material; and thermally treating the base material thus applied with the treatment liquid, to thereby dry-cure the treatment liquid.

Further, as shown in a production process flow-chart of an anti-fogging article as shown in FIG. 1C, it is a method for producing the anti-fogging article comprising the steps of: applying a treatment liquid in which an organosilane containing at least one sulfur atom at a noncoupling position and/or a simple body of a hydrolysate thereof, and a condensate which is a dimer or a higher polymeric body thereof are diluted by a hydrophilic organic solvent on a surface of a base material; thermally treating the base material thus applied with the treatment liquid, to thereby dry-cure the treatment liquid; and converting at least one functional group selected from among a sulfonic acid ester group, a thiol group, a sulfide group and a disulfide group contained at a noncoupling position into a sulfonic acid group.

### Brief Description of the Drawings

FIG. 1 is a production process flow-chart of an anti-fogging article according to the present invention, wherein three examples thereof are shown in FIGS. 1A to 1C.

### Best Mode for Carrying Out the Invention

Hereinafter, an anti-fogging treatment liquid and a method for producing the liquid are described. Further, the anti-fogging treatment liquid is described on 9 types of liquids A to I.

### (Treatment liquid A)

0.01 mol of 3-mercaptopropyl trimethoxy silane was dissolved in 1.19 ml of ethanol and, then, the resultant solution was added with 0.238 g of 0.2N sulfuric acid and, thereafter, stirred for 2 hours at 30°C, to thereby hydrolyze a methoxy group. The resultant mixture was added with 77.54 g of a 7.6% hydrogen peroxide solution and, then, stirred for 24 hours under an atmosphere of 60°C, to thereby perform an oxidation reaction of a thiol group and a condensation reaction of a silanol group.

The resultant solution was analyzed by using an FT-NMR to find that a mercapto group was oxidized, the methoxy group was hydrolyzed and trisiloxy propane sulfonic acid was synthesized. A portion of the solution was diluted 200 times by purified water and, then, analyzed by using an LC/MS to confirm that a condensate which is a dimer or a higher polymeric body was present therein and also that a ratio thereof in the entire solid content was 42% by weight. Further, when a concentration of the solid content in a trisiloxy propane sulfonic acid solution was measured, it was 2.4% by weight.

The trisiloxy propane sulfonic acid solution was diluted by ethanol such that a concentration of a solid content thereof became 0.15% by weight, to thereby obtain 150 g of a diluted solution. The thus-obtained diluted liquid was added with 100 ppm, based on the entire weight of a treatment liquid, of sodium dilauryl sulfosuccinate (trade name: NIKKOL OTP-100; available from Nikko Chemicals Co., Ltd.), to thereby obtain a treatment liquid A.

### (Treatment liquid B)

0.01 mol (4.75 g) of bis[3-(triethoxy silyl)propyl]disulfide was dissolved in 47.5 g of t-butanol and, then, added with 1.7 g of 0.1N nitric acid and, thereafter, stirred for 2 hours at 25°C. The resultant solution was analyzed by using an FT-NMR to find that an ethoxy group was hydrolyzed to generate bis[3-(trisiloxy silyl)propyl]disulfide.

1.5 g of the resultant solution was diluted 100 times by ethanol to make the entire weight up to be 150 g. Further, the thus-made solution was added with 0.1 g of a 1N sodium hydroxide solution and, then, stirred for 30 minutes at room temperature (B-1 liquid). A portion of the B-1 liquid was diluted 20 times by purified water and, then, analyzed by using an LC/MS to confirm that a condensate which is a dimer or a higher polymeric body was present therein and also that a ratio thereof in the entire compound was 30% by weight. The thus-obtained diluted liquid was added with 50 ppm, based on the entire weight of a treatment liquid, of sodium lauryl sulfate, to thereby obtain a treatment liquid B.

### (Treatment liquid C)

0.02 mol (4.75 g) of bis[3-(triethoxy silyl)propyl]disulfide was dissolved by 40.5 g of t-butanol and, then, added with 1.2 g of 0.1N nitric acid and, thereafter, stirred for 5 hours at 30°C. The resultant solution was analyzed by using an FT-NMR to confirm that an ethoxy group was hydrolyzed to generate bis[3-(trisiloxy silyl)propyl]disulfide.

2.25 g of the resultant solution was diluted 100 times by ethanol to make the entire weight up to be 150 g and the thus-made solution was designated as a treatment liquid C. A portion of the treatment liquid C was diluted 20 times by purified water and, then, analyzed by using an LC/MS to confirm that a condensate which is a dimer or a higher polymeric body was present therein and also that a ratio thereof in the entire weight of the treatment liquid was 29% by weight.

### (Treatment liquid D)

A bis[3-(trisiloxy silyl)propyl]disulfide solution prepared in a same manner as in the treatment liquid C was diluted 10 times by an ethanol/water (50/50% by vol) solution and, then, a gas containing ozone (ozone content: 200 g/m³) in which an ozone gas was diluted by an oxygen gas was allowed to pass through the resultant solution for 30 minutes at a flow rate of 2.5 l/min, to thereby perform oxidation. When the resultant solution was analyzed by using an FT-NMR, it was confirmed that a disulfide group was oxidized and trisiloxy propane sulfonic acid was synthesized. When a concentration of a solid content of the thus-obtained solution of trisiloxy propane sulfonic acid was measured, it was 2.0%.

The trisiloxy propane sulfonic acid solution was diluted by ethanol such that a concentration of a solid content thereof became 0.15% by weight, to thereby obtain 150 g of a diluted liquid which was, then, designated as a treatment liquid D. A portion of the treatment liquid D was diluted 20 times by purified water and the resultant solution was analyzed by using an LC/MS to confirm that a condensate which is a dimer or a higher polymeric body was present therein and a ratio thereof in the entire solid content was 30% by weight.

### (Treatment liquid E)

0.02 mol of 3-mercaptopropyl trimethoxy silane was dissolved in 60 ml of acetone. The resultant solution was added dropwise to 200 ml (0.4 mol/l) of an ice-cooled potassium permanganate solution for one hour while the solution is kept in an ice-cooled state. After such addition is terminated, the resultant mixture was stirred for 2 hours at 25°C to allow unreacted potassium permanganate to be changed into manganese dioxide. The resultant reaction solution was left to stand for 24 hours at 0°C to allow manganese dioxide particles to be precipitated and, then, the thus-precipitated particles were filtered out. When the resultant filtrate was analyzed by using an FT-NMR, it was found that a mercapto group was oxidized, a methoxy group was hydrolyzed, and potassium trisiloxy propane sulfonate was synthesized. Further, when a concentration of a solid content of a potassium trisiloxy propane sulfonate solution was measured, it was 3% by weight.

The thus-obtained potassium trisiloxy propane sulfonate solution was allowed to pass through 100 ml of regenerated ion-exchange resin(acid-form) (trade name: AMBERLITE IR-120Na; available from Organo Corporation) at a solution flow rate of SV4. While a pH value of the potassium trisiloxy propane sulfonate solution was 10.5, a pH value of a solution which has been ion-exchanged was 1.3; therefore, it was confirmed that potassium trisiloxy propane sulfonate was ion-exchanged to generate trisiloxy propane sulfonic acid and the potassium trisiloxy propane sulfonate solution was changed into a trisiloxy propane sulfonic acid solution. When a concentration of a solid content of the trisiloxy propane sulfonic acid solution was measured, it was 1.5% by weight.

The trisiloxy propane sulfonic acid solution was diluted by ethanol such that a concentration of a solid content thereof became 0.15% by weight, to thereby obtain 150 g of a diluted solution. The thus-obtained diluted solution was left to stand for 72 hours at 0°C to generate a condensate therein and, then, added with 100 ppm, based on the entire weight of a treatment liquid, of sodium dilauryl sulfosuccinate (trade name: NIKKOL OTP-100; available from Nikko Chemicals Co., Ltd.), to thereby obtain a treatment liquid E.

A portion of the treatment liquid E was diluted 20 times by purified water and, then, analyzed by using an LC/MS to confirm that a condensate which is a dimer or a higher polymeric body was present therein and also that a ratio thereof in the entire solid content was 15% by weight.

### (Treatment liquid F)

A trisiloxy propane sulfonic acid solution was prepared in a same manner as in the treatment liquid E and, then, diluted by ethanol such that a concentration of a solid content became 0.15% by weight, to thereby obtain 150 g of a diluted solution. Next, the thus-obtained diluted solution was added with 0.3 g of N-aminoethyl ethanol amine and, then, left to stand for 2 hours at 40°C to generate a condensate therein and, thereafter, added with 100 ppm, based on the entire weight of a treatment liquid, of sodium dilauryl sulfosuccinate (trade name: NIKKOL OTP-100; available from Nikko Chemicals Co., Ltd.), to thereby obtain a treatment liquid F.

A portion of the treatment liquid F was diluted 20 times by purified water and, then, analyzed by using an LC/MS to confirm that a condensate which is a dimer or a higher polymeric body was present therein and also that a ratio thereof in the entire solid content was 62% by weight.

### (Treatment liquid G)

A trisiloxy propane sulfonic acid solution was prepared in a same manner as in the treatment liquid E and, then, diluted by ethanol such that a concentration of a solid content became 0.15% by weight, to thereby obtain 150 g of a diluted solution. The diluted solution immediately after such dilution was designated as a treatment liquid G.

A portion of the treatment liquid G was diluted 20 times by purified water and, then, analyzed by using an LC/MS to confirm that a condensate which is a dimer or a higher polymeric body was present therein and also that a ratio thereof in the entire solid content was 0.6% by weight.

### (Treatment liquid H)

A trisiloxy propane sulfonic acid solution was prepared in a same manner as in the treatment liquid F and, then, diluted by ethanol such that a concentration of a solid content became 0.15% by weight, to thereby obtain 150 g of a diluted solution. Next, the thus-obtained diluted solution was added with 0.3 g of N-aminoethyl ethanol amine and, then, left to stand for 200 hours at 75°C to generate a condensate therein and, thereafter, the resultant solution was designated as a treatment liquid H.

A portion of the treatment liquid H was diluted 20 times by purified water and, then, analyzed by using an LC/MS to confirm that a condensate which is a dimer or a higher polymeric body was present therein and also that a ratio thereof in the entire solid content was 79% by weight.

### (Treatment liquid I)

In a same manner as in the treatment liquid C except for using 4.96 g of n-hexyl triethoxy silane in place of bis[3-(triethoxy silyl)propyl]disulfide, hydrolysis and condensation were performed and the resultant solution was diluted with ethanol such that a concentration of a solid content became 0.15% by weight, to thereby obtain 150 g of a treatment liquid I.

A portion of the treatment liquid I was diluted 20 times by purified water and, then, analyzed by using an LC/MS to confirm that a condensate which is a dimer or a higher polymeric body was present therein and also that a ratio thereof in the entire solid content was 52% by weight.

Hereinafter, embodiments of anti-fogging articles in each of which an anti-fogging film was formed on a base material by using any one of the anti-fogging treatment liquids (treatment liquids A to I) as described above and methods for producing the anti-fogging articles will be described. Further, as for base materials, a plastic lens for spectacles, an optical member for a projector, an eyepiece for a camera and a white board glass were used.

### (Example 1)

### Step of application on base material surface by dip coating:

As for a lens material, a plastic lens for spectacles having a hard coat film and an anti-reflection film (ourtermost layer being SiO₂ film) (trade name: SEIKO SUPER SOVEREIGN; available from Seiko Epson Corporation) was prepared. A plasma treatment was performed in order to clean a surface thereof. Conditions of the plasma treatment were as follows:
treatment pressure: 0.1 Torr;
introduction gas: dry air;
distance between electrodes: 24 cm;
power output: DCLKV; and
treatment time period: 15 seconds.

The plastic lens for spectacles subjected to the plasma treatment was dipped in the treatment liquid A and applied therewith while the lens was pulled up therefrom by a constant-speed pulling-up apparatus at a pulling-up rate of 20 cm/min.

### Step of thermal treatment for dry-curing:

The plastic lens for spectacles applied with the treatment liquid A was stood in a hot air circulating-type thermostat for 4 hours at 60°C to complete a reaction with a base material and, as a result, an anti-fogging lens for spectacles was obtained (Sample 1).

An angle of contact of the thus-obtained anti-fogging lens for spectacles against purified water was 5° or less and it was confirmed that there was no fault in appearance such as clouding. Further, no change in reflectance was noticed between before and after the treatment.

### (Example 2)

### Step of application on base material surface by spin coating:

An optical member for a projector which was dipped in a 1.6N potassium hydroxide solution for 3 minutes at 40°C and, thereafter, sufficiently rinsed with purified water was applied with the treatment liquid B by a method as described below by using a spin coater. Namely, the optical member for the projector was seized by a vacuum chuck in the center or thereabout and, then, 5 ml of the treatment liquid was ejected while it was rotated at a rotation rate of 500 rpm and, thereafter, the optical member was rotated for 10 seconds at a rotation rate of 2500 rpm to spin off an excess portion of the treatment liquid.

### Step of thermal treatment for dry-curing:

The optical member for the projector applied with the treatment liquid B was stood in a hot air circulating-type thermostat for one hour at 120°C to complete a reaction with a base material.

### Step of conversion of functional group into sulfonic acid group:

By being in contact with an ozone-containing gas in which an ozone gas was diluted with an oxygen gas (ozone content being 200g/m³) for 10 minutes at 90°C for performing an oxidation treatment, a sulfide group was converted into a sulfonic acid group, to thereby obtain an anti-fogging optical member for the projector (Sample 2).

Confirmation of the presence of the sulfonic acid group was conducted by performing dyeing by methylene blue. Since methylene blue forms an extremely strong ionic bond with sulfonic acid, it is well known that, when the sulfonic acid group is present, it is dyed in blue. After a portion of the thus-obtained anti-fogging optical member for the projector was dipped in a 1mM aqueous solution of methylene blue (pH: 4) for one minute at 25°C, it was rinsed for 3 minutes by an ultrasonic cleaning apparatus (bath capacity: 2.6 liter; oscillation frequency: 45 KHz; and output: 120 W) filled with purified water and, then, it was confirmed that the portion was dyed in blue and, accordingly, that sulfonic acid was present. An angle of contact of the thus-obtained optical member for the projector against purified water was 5° or less and no fault in appearance such as clouding was noticed. No change in reflectance was found between before and after the treatment.

### (Example 3)

### Step of application on base material surface by spin coating:

The treatment liquid C was dipped in a 1.6N potassium hydroxide solution for 3 minutes at 40°C and, thereafter, an optical member for a projector which was sufficiently rinsed with purified water was prepared. The thus-prepared optical member for the projector was applied with the treatment liquid B by using a spin coater. In such application of the treatment liquid by using the spin coater, the optical member for the projector was seized by a vacuum chuck in the center or thereabout and, then, 3 ml of the treatment liquid was ejected while it was rotated at a rotation rate of 500 rpm and, thereafter, such rotation was held for 3 seconds and, further, the optical member was rotated for 10 seconds at a rotation rate of 2500 rpm to spin off an excess portion of the treatment liquid.

### Step of thermal treatment for dry-curing:

The optical member for the projector applied with the treatment liquid C was stood in a hot air circulating-type thermostat for one hour at 120°C to complete a reaction with a base material.

### Step of conversion of functional group into sulfonic acid group:

By being in contact with ozone water in which an ozone gas was dissolved (ozone content being 70 to 80 ppm) for 20 minutes at room temperature for performing an oxidation treatment, a sulfide group was converted into a sulfonic acid group, to thereby obtain an anti-fogging optical member for the projector (Sample 3).

Confirmation of the presence of the sulfonic acid group was conducted by performing dyeing by methylene blue. After a portion of the thus-obtained anti-fogging optical member for the projector was dipped in a 1mM aqueous solution of methylene blue (pH: 4) for one minute at 25°C, it was rinsed for 3 minutes by an ultrasonic cleaning apparatus (bath capacity: 2.6 liter; oscillation frequency: 45 KHz; and output: 120 W) filled with purified water and, then, it was confirmed that the portion was dyed in blue and, accordingly, that sulfonic acid was present. An angle of contact of the thus-obtained anti-fogging optical member for the projector against purified water was 5° or less and no fault in appearance such as clouding was noticed. No change in reflectance was noticed between before and after the treatment.

### (Example 4)

### Step of application on base material surface by dip coating:

As for a lens material (base material), a plastic lens for spectacles having a hard coat film and an anti-reflection film (outermost layer being SiO₂ film) (trade name: SEIKO SUPER SOVEREIGN; available from Seiko Epson Corporation) was prepared. A plasma treatment was performed in order to clean a surface thereof. Conditions of the plasma treatment were as follows:
treatment pressure: 0.1 Torr;
introduction gas: dry air;
distance between electrodes: 24 cm;
power output: DC1KV; and
treatment time period: 15 seconds.

The plastic lens for spectacles subjected to the plasma treatment was dipped in the treatment liquid C and applied therewith while the lens was pulled up therefrom by a constant-speed pulling-up apparatus at a pulling-up rate of 20 cm/min.

### Step of thermal treatment for dry-curing:

The plastic lens for spectacles applied with the treatment liquid C was stood in a hot air circulating-type thermostat for 4 hours at 60°C to complete a reaction with a base material and, as a result, an anti-fogging lens for spectacles was obtained (Sample 4).

An angle of contact of the thus-obtained anti-fogging lens for spectacles against purified water was 5° or less and it was confirmed that there was no fault in appearance such as clouding. Further, no change in reflectance was noticed between before and after the treatment.

### (Example 5)

### Step of application on base material surface by dip coating:

An optical member for a projector which was dipped in a 1.6N potassium hydroxide solution for 3 minutes at 40°C and, then, sufficiently rinsed with purified water was prepared. The thus-prepared optical member for the projector was dipped in the treatment liquid D and applied therewith while it was pulled up therefrom by a constant-speed pulling-up apparatus at a pulling-up rate of 20 cm/min.

### Step of thermal treatment for dry-curing:

The optical member for the projector applied with the treatment liquid D was stood in a hot air circulating-type thermostat for one hour at 120°C to' complete a reaction with a base material and, as a result, an anti-fogging optical member for the projector was obtained (Sample 5).

An angle of contact of the thus-obtained anti-fogging optical member for the projector against purified water was 5° or less and it was confirmed that there was no fault in appearance such as clouding. Further, no change in reflectance was noticed between before and after the treatment.

### (Example 6)

### Step of application on base material surface by dip coating:

A white board glass which was dipped in a 1.6N potassium hydroxide solution for 3 minutes at 40°C and, then, sufficiently rinsed with purified water was prepared. The thus-prepared white board glass was dipped in the treatment liquid E and applied therewith while it was pulled up therefrom by a constant-speed pulling-up apparatus at a pulling-up rate of 20 cm/min.

### Step of thermal treatment for dry-curing:

The white board glass applied with the treatment liquid E was stood in a hot air circulating-type thermostat for one hour at 120°C to complete a reaction with a base material and, as a result, an anti-fogging white board glass was obtained (Sample 6).

An angle of contact of the thus-obtained anti-fogging white board glass against purified water was 5° or less and it was confirmed that there was no fault in appearance such as clouding. Further, no change in reflectance was noticed between before and after the treatment.

### (Example 7)

### Step of application on base material surface by dip coating:

An eyepiece for a camera which was subjected to a plasma treatment for 60 seconds was prepared as a base material. Conditions of the plasma treatment were as follows:
treatment pressure: 0.1 Torr;
introduction gas: dry air;
distance between electrodes: 24 cm;
power output: DC1KV; and
treatment time period: 60 seconds.

The eyepiece for the camera subjected to the plasma treatment under the aforementioned conditions was dipped in the treatment liquid F and applied therewith while the eyepiece for the camera was pulled up therefrom by a constant-speed pulling-up apparatus at a pulling-up rate of 20 cm/min.

### Step of thermal treatment for dry-curing:

The eyepiece for the camera applied with the treatment liquid F was stood in a hot air circulating-type thermostat for one hour at 120°C to complete a reaction with a base material and, as a result, an anti-fogging eyepiece for the camera was obtained (Sample 7).

An angle of contact of the thus-obtained anti-fogging eyepiece for the camera against purified water was 5° or less and it was confirmed that there was no fault in appearance such as clouding. Further, no change in reflectance was noticed between before and after the treatment.

### (Comparative Example 1)

### Step of application on base material surface by dip coating and step of thermal treatment for dry-curing:

A white board glass which was dipped in a 1.6N potassium hydroxide solution for 3 minutes at 40°C and, then, sufficiently rinsed with purified water was dipped in the treatment liquid G and applied therewith while it was pulled up therefrom by a constant-speed pulling-up apparatus at a pulling-up rate of 20 cm/minute. The resultant white board glass was stood in a hot air circulating-type thermostat for one hour at 120°C to be dry-cured and, as a result, an anti-fogging white board glass was obtained (Sample 8).

An angle of contact of the thus-obtained anti-fogging white board glass against purified water was 10° and it was confirmed that there was no fault in appearance such as clouding. Further, no change in reflectance was noticed between before and after the treatment.

### (Comparative Example 2)

### Step of application on base material surface by dip coating

An optical member for a projector which was dipped in a 1.6N potassium hydroxide solution for 3 minutes at 40°C and, then, sufficiently rinsed with purified water was dipped in the treatment liquid H and applied therewith while it was pulled up therefrom by a constant-speed pulling-up apparatus at a pulling-up rate of 20 cm/min.

### Step of thermal treatment for dry-curing:

The optical member for the projector applied with the treatment liquid H was stood in a hot air circulating-type thermostat for one hour at 120°C to be dry-cured and complete a reaction with a base material and, as a result, an anti-fogging optical member for the projector was obtained (Sample 9).

An angle of contact of the thus-obtained anti-fogging optical member for the projector against purified water was 12° and it was confirmed that there was slight clouding in appearance. Further, while reflectance on one face thereof was 5% before the treatment, it was increased to 8% after the treatment.

### (Comparative Example 3)

### Step of application on base material surface by spin coating:

A white board glass which was dipped in a 1.6N potassium hydroxide solution for 3 minutes at 40°C and, thereafter, sufficiently rinsed with purified water was applied with the treatment liquid I by a method as described below by using a spin coater. Namely, the white board glass was seized by a vacuum chuck in the center or thereabout and, then, 3 ml of the treatment liquid was ejected while it was rotated at a rotation rate of 500 rpm and, thereafter, such rotation was held for 3 seconds and, subsequently, the white board glass was rotated for 10 seconds at a rotation rate of 2500 rpm to spin off an excess portion of the treatment liquid.

### Step of thermal treatment for dry-curing:

The white board glass applied with the treatment liquid I was stood in a hot air circulating-type thermostat for one hour at 120°C to complete a reaction with a base material (Sample 10).

An angle of contact of the thus-obtained anti-fogging white board glass against purified water was 43° and it was confirmed that there was no fault in appearance such as clouding. Further, there was no change in reflectance before and after the treatment. By using a methylene blue dyeing method, dyeing of the anti-fogging white board glass was attempted; however, it was not dyed.

### (Comparative Example 4)

### Step of application on base material surface by spin coating:

A white board glass which was dipped in a 1.6N potassium hydroxide solution for 3 minutes at 40°C and, thereafter, sufficiently rinsed with purified water was applied with the treatment liquid I by a method as described below by using a spin coater. Namely, the white board glass was seized by a vacuum chuck in the center or thereabout and, then, 3 ml of the treatment liquid was ejected while it was rotated at a rotation rate of 500 rpm and, thereafter, such rotation was held for 3 seconds and, subsequently, the white board glass was rotated for 10 seconds at a rotation rate of 2500 rpm to spin off an excess portion of the treatment liquid.

### Step of thermal treatment for dry-curing:

The white board glass applied with the treatment liquid I was stood in a hot air circulating-type thermostat for one hour at 120°C to complete a reaction with a base material.

By being in contact with an ozone-containing gas in which an ozone gas was diluted with an oxygen gas (ozone content being 200g/m³) for 10 minutes at 90°C for performing an oxidation treatment, to thereby obtain an anti-fogging white board glass (Sample 11).

Confirmation of the presence of the sulfonic acid group was conducted by performing dyeing by methylene blue. After a portion of the thus-obtained anti-fogging white board glass was dipped in a 1mM aqueous solution of methylene blue (pH: 4) for one minute at 25°C, it was rinsed for 3 minutes by an ultrasonic cleaning apparatus (bath capacity: 2.6 liter; oscillation frequency: 45 KHz; and output: 120 W) filled with purified water and, then, it was confirmed that the portion was dyed in blue and, accordingly, that sulfonic acid was present. An angle of contact of the thus-obtained anti-fogging white board glass against purified water was 7° or less and no fault in appearance such as clouding was noticed. No change in reflectance was found between before and after the treatment.

### (Comparative Example 5)

### Step of application on base material surface by dip coating:

An eyepiece for a camera which was subjected to a plasma treatment for 60 seconds was prepared as a base material. Conditions of the plasma treatment were as follows:
treatment pressure: 0.1 Torr;
introduction gas: dry air;
distance between electrodes: 24 cm;
power output: DC1KV; and
treatment time period: 60 seconds.

The eyepiece for the camera subjected to the plasma treatment under the aforementioned conditions was dipped in the treatment liquid E and applied therewith while the eyepiece for the camera was pulled up therefrom by a constant-speed pulling-up apparatus at a pulling-up rate of 20 cm/min.

### Step of thermal treatment for dry-curing:

The eyepiece for the camera applied with the treatment liquid E was stood in a hot air circulating-type thermostat for one hour at 40°C to complete a reaction with a base material and, as a result, an anti-fogging eyepiece for the camera was obtained (Sample 12).

An angle of contact of the thus-obtained anti-fogging eyepiece for the camera against purified water was 5° or less and it was confirmed that there was no fault in appearance such as clouding. Further, no change in reflectance was noticed between before and after the treatment.

Preparation conditions of the anti-fogging articles (Samples 1 to 12) in Examples and Comparative Examples as described above are shown in Table 1.

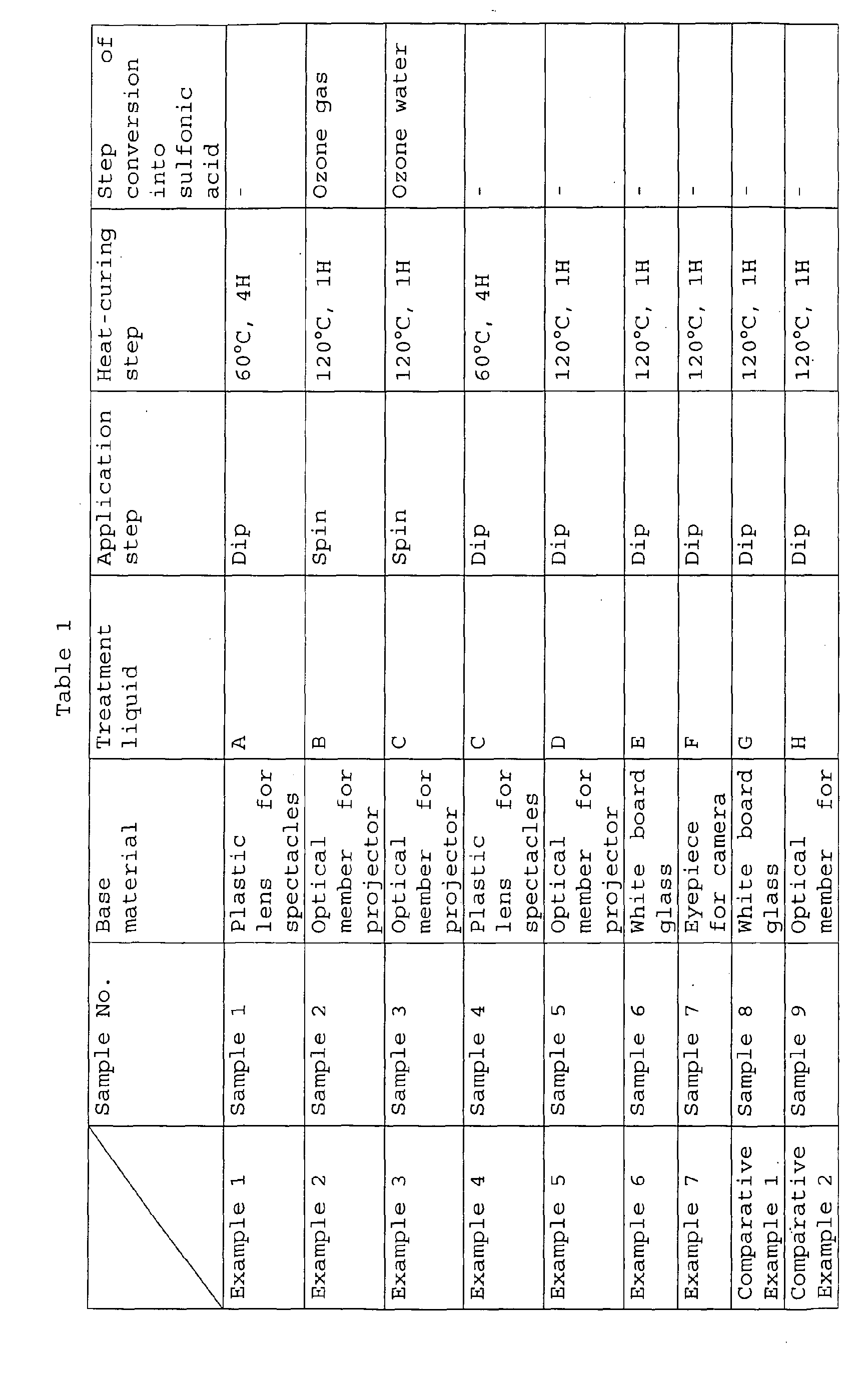

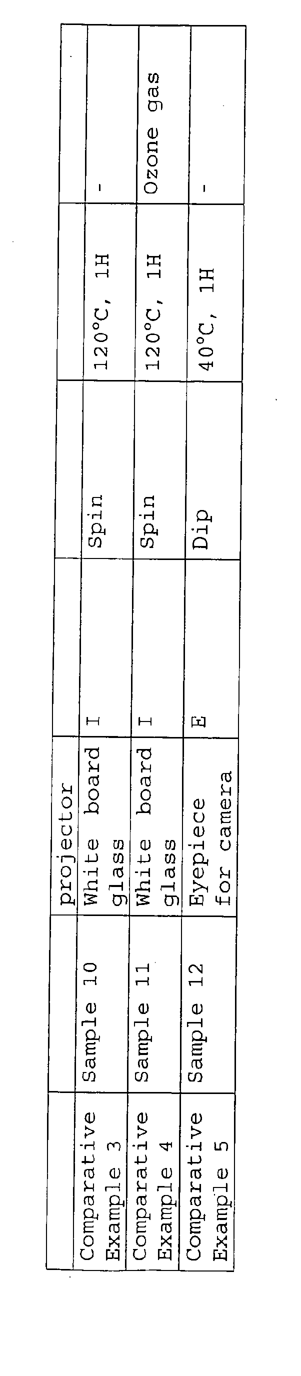

Further, optical articles as obtained in the aforementioned Examples and Comparative Examples were evaluated in accordance with evaluation methods as described below. The results are shown in Table 2. As for evaluation items, adopted were an initial anti-fogging property, an anti-fogging durability, a scratch resistance, a water stain test and a dyeing test. Evaluation methods of respective evaluation items are described below.

### (Evaluation method)

### Initial anti-fogging property:

A sample stored at 20°C was transferred to an environment at 40°C 90% RH and generation of fogging on a surface of the sample was visually inspected. An intensity of fogging was judged based on the following 3-step evaluation criteria:
○: No fogging appeared at all;
**Δ**: Fogging disappeared after 2 minutes have elapsed (practically problematic); and
×: Fogging did not disappear even after 2 minutes have elapsed.

### Anti-fogging durability:

After a surface of an article was rubbed 1000 times with cloth (made of cotton) with a load of 500 g being put thereon, it was sufficiently rinsed with purified water and, then, dried. The resultant article was stored at 20°C to be a sample. The sample was transferred to an environment at 40°C 90% RH and generation of fogging on a surface of the sample was visually inspected. An intensity of fogging was judged based on the following 3-step evaluation criteria:
○: No fogging appeared at all;
**Δ**: Fogging disappeared after 2 minutes have elapsed (practically problematic); and
×: Fogging did not disappear even after 2 minutes have elapsed.

### Scratch resistance:

A surface of an optical article was rubbed 50 times with a #0000 steel wool with a load of 1 kg being put thereon. An intensity of a scratch was judged based on the following 3-step evaluation criteria:
○: No scratch was generated at all;
**Δ**: 1 to 10 fine streaks of scratches were generated (practically no problem); and
×: A multiplicity of fine scratches were generated.

### Water stain test:

Tap water was allowed to drip on a surface of an optical article and, then, the surface thereof was dried and, thereafter, any residual material on the surface thereof was tried to be wiped off by cloth. An evaluation was conducted based on the following criteria:
○: All residual materials were able to be wiped off;
**Δ**: A part of residual materials remained (practically problematic); and
×: Most of residual materials remained.

### Dyeing test:

Confirmation of the presence of the sulfonic acid group was conducted by performing dyeing by methylene blue. Since methylene blue forms an extremely strong ionic bond with sulfonic acid, it is well known that, when the sulfonic acid group is present, it is dyed in blue. After a portion of an obtained anti-fogging white board glass was dipped in a 1mM aqueous solution of methylene blue (pH: 4) for one minute at 25°C, it was rinsed for 3 minutes by an ultrasonic cleaning apparatus (bath capacity: 2.6 liter; oscillation frequency: 45 KHz; and output: 120 W) filled with purified water and, then, it was confirmed whether or not the portion was dyed in blue. An evaluation was conducted based on the following criteria:
○ : The portion was dyed; and ×: The portion was not dyed.

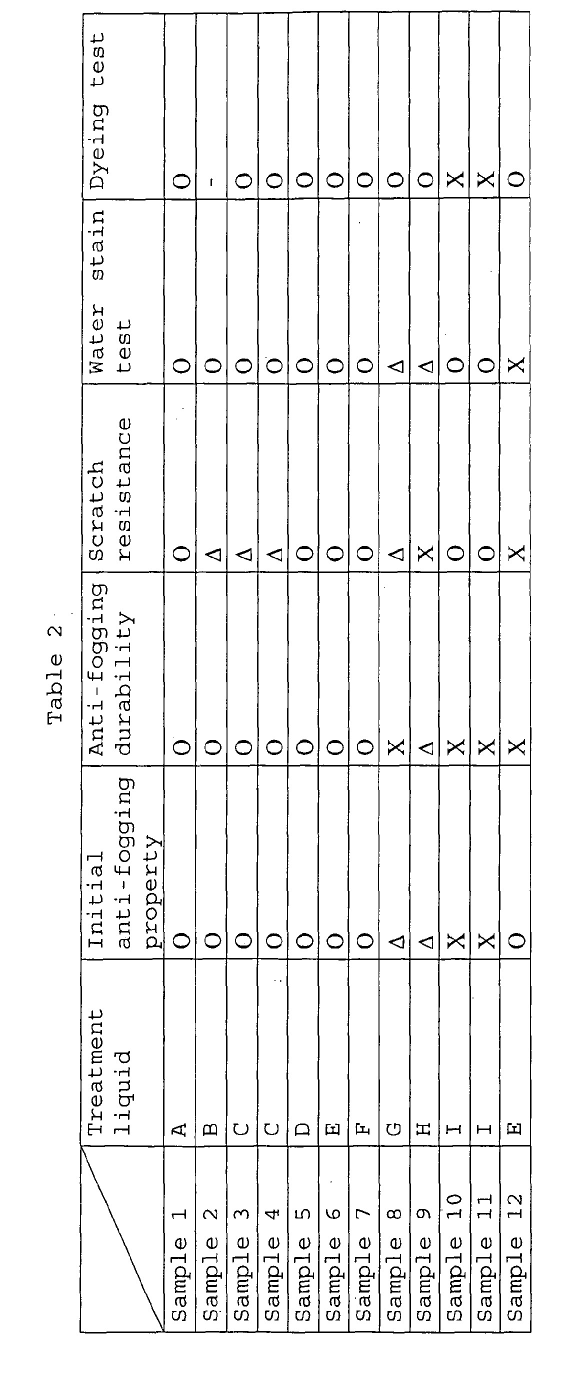

From the results as shown in Table 2, the initial anti-fogging performance, the anti-fogging durability and the scratch resistance of Examples 1 to 7 (Samples 1 to 7 using the treatment liquids A to F) were favorable, while the initial anti-fogging performance and the anti-fogging durability of Comparative Example 3 (Sample 10 using the treatment liquid I) and Example 11 (Sample 11 using the treatment liquid I) were unfavorable; therefore, by treating the surface of the article by the treatment liquid in which the organosilane containing at least one sulfur atom at the noncoupling position and/or the simple body of the hydrolysate thereof, and the condensate which is the dimer or the higher polymeric body thereof are diluted by the hydrophilic organic solvent, the sufficient density of the hydrophilic group can be obtained and, also, the anti-fogging treatment liquid capable of forming the film imparted with the excellent anti-fogging performance can be obtained.

Further, the initial anti-fogging performance, the anti-fogging durability and the scratch resistance of Examples 1 to 7 (Samples 1 to 7 using the treatment liquids A to F) are favorable, while the initial anti-fogging performance, the anti-fogging durability and the scratch resistance of Comparative Example 1 (Sample 8 using the treatment liquid G) and Comparative Example 2 (Sample 9 using the treatment liquid H) were unfavorable; therefore, since the organosilane containing at least one sulfur atom at the noncoupling position and/or the condensate which is the dimer or the higher polymeric body of the hydrolysate thereof is, based on the entire weight of the organosilane, 1% by weight to less than 70% by weight, the anti-fogging treatment liquid capable of forming the film imparted with the anti-fogging performance in which the hydrophilic group is efficiently arranged therein and the film strength and adhesiveness to the surface of the article are enhanced can be obtain.

Further, since the initial anti-fogging performance and the anti-fogging durability of Examples 1 to 7 (Samples 1 to 7 using the treatment liquids A to F) are favorable, the treatment liquid in which the organosilane containing at least one sulfur atom at the noncoupling position and/or the simple body of the hydrolysate thereof, and the condensate which is the dimer or the higher polymeric body thereof are diluted by the hydrophilic organic solvent may contain the surfactant.

Further, since no fault in appearance is noticed in Examples 1 to 7 (Samples 1 to 7 using the treatment liquids A to F), the film imparted with the anti-fogging performance formed by using the treatment liquid in which the organosilane containing at least one sulfur atom at the noncoupling position and/or the simple body of the hydrolysate thereof, and the condensate which is the dimer or the higher polymeric body thereof are diluted by the hydrophilic organic solvent is extremely thin and does not impair an optical characteristic; therefore, the anti-fogging white board glass having the anti-fogging performance (optical article) can be obtained. The reason why a fault in appearance was generated in Comparative Example 2 (Sample 9 using the treatment liquid H) is considered as that an amount of the condensate to be contained was large and a film constituting material was not uniformly arranged in the film.

Further, in Examples 1 to 7 (Samples 1 to 7 using the treatment liquids A to F), the anti-fogging durability, the water stain resistance and the scratch resistance are favorable, while the anti-fogging durability, the water stain resistance and the scratch resistance of Comparative Example 5 (Sample 12 which used the treatment liquid E and was held for one hour at 40°C in the step of a thermal treatment for dry-curing) were unfavorable. Therefore, by subjecting the base material applied with the treatment liquid in which the organosilane containing at least one sulfur atom at the noncoupling position and/or the simple body of the hydrolysate thereof, and the condensate which is the dimer or the higher polymeric body thereof are diluted by the hydrophilic organic solvent to the step of the thermal treatment for from one minute to 24 hours in the range of from 50°C to 300°C to dry-cure it, the anti-fogging article having the film imparted with the excellent anti-fogging performance formed thereon can be produced.

## Claims

1. An anti-fogging treatment liquid in which an organosilane containing at least one sulfur atom at a noncoupling position and/or a simple' body of a hydrolysate thereof, and a condensate which is a dimer or a higher polymeric body thereof are diluted by a hydrophilic organic solvent.

2. The anti-fogging treatment liquid according to Claim 1, being **characterized in that** the condensate which is a dimer or a higher polymeric body of the organosilane containing at least one sulfur atom at the noncoupling position is, based on the entire weight of the organosilane, from 1% by weight to less than 70% by weight.

3. The anti-fogging treatment liquid according to Claim 1 or 2, being **characterized in that** the organosilane containing at least one sulfur atom at the noncoupling position and/or the hydrolysate thereof contains at least one functional group selected from among a sulfonic acid ester group, a thiol group, a sulfide group, a disulfide group and a sulfonic acid group.

4. The anti-fogging treatment liquid according to any one of Claims 1 to 3, in which the organosilane containing at least one sulfur atom at the noncoupling position and/or the simple body of the hydrolysate thereof, and the condensate which is the dimer or the higher polymeric body thereof are diluted by the hydrophilic organic solvent, being **characterized by** further comprising a surfactant.

5. An anti-fogging article in which a film having an anti-fogging performance formed by the anti-fogging treatment liquid according to any one of Claims 1 to 4 is formed on a surface of a base material.

6. The anti-fogging article according to Claim 5, being **characterized in that** the base material is a lens.

7. A method for producing an anti-fogging treatment liquid in which an organosilane containing at least one sulfur atom at a noncoupling position and/or a hydrolysate thereof is maintained for from 0.1 hour to 200 hours at from 0°C to 70°C, to thereby produce a simple body or a condensate which is a dimer or a higher polymeric body thereof.

8. The method for producing the anti-fogging treatment liquid according to Claim 7, being **characterized in that** the organosilane containing at least one sulfur atom at the noncoupling position and/or the hydrolysate thereof is treated in the presence of at least one catalyst selected from among an acid catalyst, an alkali catalyst, an amine-type catalyst and a metallic compound catalyst, to thereby produce the simple body or the condensate which is the dimer or the higher polymeric body thereof.

9. The method for producing the anti-fogging treatment liquid according to Claim 7 or 8, being **characterized in that** the organosilane containing at least one sulfur atom at the noncoupling position and/or the hydrolysate thereof contains at least one functional group selected from among the sulfonic acid ester, the thiol group, the sulfide group and the disulfide group and **in that** the functional group is converted into a sulfonic acid group.

10. A method for producing an anti-fogging article, comprising the steps of:
applying a treatment liquid in which an organosilane containing at least one sulfur atom at a noncoupling position and/or a simple body of a hydrolysate thereof, and a condensate which is a dimer or a higher polymeric body thereof are diluted by a hydrophilic organic solvent on a surface of a base material; and
thermally treating the base material thus applied with the treatment liquid, to thereby dry-cure the treatment liquid.

11. A method for producing an anti-fogging article, comprising the steps of:
converting at least one functional group selected from among a sulfonic acid ester group, a thiol group, a sulfide group and a disulfide group contained in a treatment liquid in which an organosilane containing at least one sulfur atom at a noncoupling position and/or a simple body of a hydrolysate thereof, and a condensate which is a dimer or a higher polymeric body are diluted by a hydrophilic organic solvent into a sulfonic acid group;
applying the treatment liquid on a surface of a base material; and
thermally treating the base material thus applied with the treatment liquid, to thereby dry-cure the treatment liquid.

12. A method for producing an anti-fogging article, comprising the steps of:
applying a treatment liquid in which an organosilane containing at least one sulfur atom at a noncoupling position and/or a simple body of a hydrolysate thereof, and a condensate which is a dimer or a higher polymeric body thereof are diluted by a hydrophilic organic solvent on a surface of a base material;
thermally treating the base material thus applied with the treatment liquid, to thereby dry-cure the treatment liquid; and
converting at least one functional group selected from among a sulfonic acid ester group, a thiol group, a sulfide group and a disulfide group contained at a noncoupling position into a sulfonic acid group.

13. The method for producing the anti-fogging article according to any one of Claims 10 to 12, being **characterized in that** the step of thermally treating the base material applied with the treatment liquid to dry-cure the treatment liquid is performed for from 1 minute to 24 hours at a temperature in the range of from 50°C to 300°C.

14. The method for producing the anti-fogging article according to any one of Claims 10 to 12, being **characterized in that** the method for applying the treatment liquid on the surface of the base material is a dip coating method.

15. The method for producing the anti-fogging article according to any one of Claims 10 to 12, being **characterized in that** the method for applying the treatment liquid on the surface of the base material is a spin coating method.
